# EUROPEAN PATENT SPECIFICATION

(11) **EP 3 303 428 B1**
(45) Date of publication and mention of the grant of the patent: **19.02.2020**
(21) Application number: 16734769.9
(22) Date of filing: 27.05.2016
(51) Int. Cl.: C08F 236/06, B60C 1/00, C08K 5/00, C08F 220/18, C08K 5/52, C08L 9/00, C08L 7/00, C08L 9/06, C08K 3/04, C08K 3/01, C08F 236/18, C08L 91/00

(54) **A RUBBER COMPOSITION**
KAUTSCHUKZUSAMMENSETZUNG
COMPOSITION DE CAOUTCHOUC

(30) Priority: 29.05.2015 WO PCT/JP2015/066275
(43) Date of publication of application: 11.04.2018
(73) Proprietor: Compagnie Générale des Etablissements Michelin, 63000 Clermont-Ferrand (FR)
(72) Inventor: MORIYAMA, Masahiko, Tokyo 163-1073 (JP); COSTE, Nathalie, Clermont-Ferrand 63040 Cedex 9 (FR); MATMOUR, Rachid, Clermont-Ferrand 63040 Cedex 9 (FR); DOTSON, Michael Edward, Tokyo 163-1073 (JP)
(74) Representative: Regimbeau
(86) International application number: PCT/JP2016/066517
(87) International publication number: WO 2016/195052

(56) References cited:
- EP-A1- 0 940 433
- EP-A1- 1 535 960
- US-A1- 2011 274 932

## Description

### 1. FIELD OF THE INVENTION

The field of the present invention is that of rubber compositions for the tread of tires, more specifically rubber composition for the tread of snow tires or winter tires that are capable of running on snow-covered ground.

### 2. BACKGROUND

As is known, the snow tires classified in a category of use "snow", identified by an inscription the Alpine symbol ("3-peak-mountain with snowflake), marked on their sidewalls, mean tires whose tread patterns, tread compounds or structures are primarily designed to achieve, in snow conditions, a performance better than that of normal tires intended for normal on-road use with regard to their abilities to initiate, maintain or stop vehicle motion.

Snowy ground, referred to as white ground, has the feature of having a low friction coefficient, which leads to the development of snow tires (or winter tires) that comprise treads based on diene rubber compositions that have a low glass transition temperature, Tg. However, the grip performance, on wet ground, of these tires comprising such treads is generally inferior to that of the normal tires, the treads of which are generally based on rubber compositions of different formulations, in particular that have a higher Tg. From the aforegoing, it is a constant objective of tire manufacturers to further improve the grip performance of snow tires (or winter tires) on wet ground without, however, deteriorating the grip performance on snow.

In order to improve the winter performance at superior wet braking of a tire tread, it has been proposed to introduce, into the constituent rubber composition of the tread, elastomers comprising methacrylic ester monomer units bearing a function that interacts with silica such as an alcohol function. The weight contents of the monomer units of the methacrylic acid ester in the elastomer are generally less than 20% of the weight of the elastomer, which represents a molar content of the monomer units of the methacrylic acid ester much lower than 20% considering the respective molar masses of the constituent monomer units of the elastomer. Reference may, for example, be made to the publication of patent application EP 2 239 296. Otherwise EP 1 535 960 A1 describes a rubber composition comprising at least 20 mol% of a methacrylic acid ester.

### 3. BRIEF DESCRIPTION OF THE INVENTION

By continuing their research, the inventors have discovered a novel and specific rubber composition for a tire tread, which makes it possible to achieve the above objective to improve further the grip performance of a tire on wet ground without degrading the grip on snow.

Thus, a first subject of the invention is a rubber composition comprising (in phr, parts by weight per hundred parts of elastomers present in the elastomer matrix), a reinforcing filler, more than 35 phr of a liquid plasticizer exhibiting a Tg of less than -65°C, a crosslinking system, an elastomer matrix reactive to the crosslinking system, the elastomer matrix comprising an elastomer A comprising monomer units of a first methacrylic acid ester which represent at least 20 mol% of the monomer units of the elastomer A.

Moreover, aspects of the present invention can be as follows.
[1.] A rubber composition comprising:
   - a reinforcing filler;
   - more than 35 phr of a liquid plasticizer exhibiting a Tg of less than -65°C;
   - a crosslinking system;
   - an elastomer matrix reactive to the crosslinking system, the elastomer matrix comprising an elastomer A comprising monomer units of a first methacrylic acid ester which represent at least 20 mol% of the monomer units of the elastomer A,
   wherein phr represents parts by weight per hundred parts of elastomers present in the elastomer matrix.
[2.] The rubber composition according to [1], in which the monomer units of the first methacrylic acid ester represent at least 30 mol% of the monomer units of the elastomer A.
[3.] The rubber composition according to either one of [1] and [2], in which the first methacrylic acid ester corresponds to the formula (I)

   CH₂=C(CH₃)-COO-Z (I)

   where Z is a carbon-based chain comprising at least 2 carbon atoms, optionally substituted and optionally interrupted by one or more heteroatoms.
[4.] The rubber composition according to [3], in which Z comprises 2 to 20 carbon atoms.
[5.] The rubber composition according to [3] or [4], in which Z is a hydrocarbon chain.
[6.] The rubber composition according to any one of [1] to [5], in which the first methacrylic acid ester is different from a methacrylic acid ester comprising one or more epoxide functions.
[7.] The rubber composition according to any one of [1] to [6], in which the first methacrylic acid ester is an aliphatic compound.
[8.] The rubber composition according to any one of [1] to [7], in which the elastomer matrix comprises monomer units that are reactive to the crosslinking system.
[9.] The rubber composition according to any one of [1] to [8], in which the elastomer matrix comprises a second elastomer, elastomer B, which comprises monomer units that are reactive to the crosslinking system.
[10.] The rubber composition according to [9], in which the elastomer B is a diene elastomer.
[11.] The rubber composition according to [10], in which the elastomer B is an essentially unsaturated diene elastomer selected from polybutadienes, polyisoprenes, butadiene copolymers, isoprene copolymers and mixtures thereof.
[12.] The rubber composition according to any one of [9] to [11], in which the elastomer matrix consists of the elastomer A and of the elastomer B.
[13.] The rubber composition according to any one of [1] to [12], in which the monomer units of the first methacrylic acid ester present in the elastomer A represent 100 mol% of the monomer units of the elastomer A.
[14.] The rubber composition according to [13], in which the elastomer A is a homopolymer of 2-ethylhexyl methacrylate, a homopolymer of n-octyl methacrylate, a homopolymer of isodecyl methacrylate or a homopolymer of n-tridecyl methacrylate.
[15.] The rubber composition according to [8], in which the elastomer A comprises monomer units that are reactive to the crosslinking system.
[16.] The rubber composition according to [15], in which the elastomer A comprises monomer units of a second monomer, which monomer units of the second monomer are reactive to the crosslinking system.
[17.] The rubber composition according to [16], in which the monomer units of the second monomer contain at least one NH₂, OH, imide, carbonate or epoxy group or a carbon-carbon double bond.
[18.] The rubber composition according to [17], in which the second monomer of the elastomer A is a 1,3-diene.
[19.] The rubber composition according to [18], in which the second monomer of the elastomer A is 1,3-butadiene or isoprene.
[20.] The rubber composition according to [16] or [17], in which the second monomer of the elastomer A is a second methacrylic acid ester.
[21.] The rubber composition according to [20], in which the second methacrylic acid ester is dicyclopentadienyloxyethyl methacrylate.
[22.] The rubber composition according to [20], in which the second methacrylic acid ester is glycidyl methacrylate.
[23.] The rubber composition according to [20], in which the second methacrylic acid ester is glycerol carbonate methacrylate.
[24.] The rubber composition according to any one of [16] to [23], in which the elastomer A is a copolymer of the first methacrylic acid ester and of the second monomer.
[25.] The rubber composition according to any one of [1] to [24], in which the content of the elastomer A is more than 50 phr and up to 100 phr.
[26.] The rubber composition according to any one of [1] to [25], in which the content of liquid plasticizer is less than 100 phr.
[27.] The rubber composition according to any one of [1] to [26], in which the liquid plasticizer exhibits the Tg of less than -80°C.
[28.] The rubber composition according to any one of [1] to [27], in which the liquid plasticizer is a vegetable oil or a phosphate plasticizer.
[29.] The rubber composition according to any one of [1] to [28], further comprising a hydrocarbon plasticizing resin.
[30.] The rubber composition according to any one of [1] to [29], in which a content of the reinforcing filler is between 40 and 200 phr.
[31.] The rubber composition according to any one of [1] to [30], in which the reinforcing filler comprises an inorganic filler.
[32.] The rubber composition according to [31], in which the inorganic filler is a silica.
[33.] The rubber composition according to [31] or [32], further comprising a coupling agent.
[34.] The rubber composition according to any one of [1] to [33], in which the reinforcing filler comprises a carbon black.
[35.] A tire tread that comprises a rubber composition according to any one of the preceding items.
[36.] A winter tire having a tire tread according to [35].

The tires of the invention are particularly intended to equip passenger motor vehicles, including 4×4 (four-wheel drive) vehicles and SUV (Sport Utility Vehicles) vehicles, and also industrial vehicles in particular chosen from vans and heavy duty vehicles (i.e., bus or heavy road transport vehicles (lorries, tractors, trailers).

The invention and its advantages will be easily understood in the light of the description and implementation examples which follow.

### 4. DETAILED DESCRIPTION OF THE INVENTION

Any range of values denoted by the expression "between a and b" represents the field of values ranging from more than a to less than b (that is to say limits a and b excluded) whereas any range of values denoted by the expression "from a to b" means the field of values ranging from a up to b (that is to say including the strict limits a and b).

The expression "based on" used with reference to a composition should be understood to mean a composition comprising the mixture and/or the reaction product of the various constituents used, some of these base constituents being capable of reacting, or intended to react, with one another, at least in part, during the various phases of manufacture of the composition, in particular during the crosslinking or vulcanization thereof.

All the percentages are percentages by weight unless otherwise indicated.

The abbreviation "phr" means parts by weight per hundred parts of elastomers present in the elastomer matrix.

### 4-1. Elastomer matrix

The expression "elastomer matrix" is understood to mean all of the elastomers present in the rubber composition.

The elastomer A which forms all or part of the elastomer matrix has the essential feature of comprising monomer units of a (one or more) first methacrylic acid ester which represent at least 20 mol% of the monomer units of the elastomer A, preferably at least 30 mol% of the monomer units of the elastomer A, more preferably at least 50 mol% of the monomer units of the elastomer A. These preferred ranges may be applied to any one of the embodiments of the invention.

According to one embodiment of the invention, the first methacrylic acid ester is an aliphatic compound.

According to one particular embodiment of the invention, the first methacrylic acid ester is different from a methacrylic acid ester comprising one or more epoxide functions. This particular embodiment implies that the elastomer A may contain monomer units of a methacrylic acid ester comprising one or more epoxide functions on condition that it also contains monomer units of another methacrylic acid ester, in this particular case the first methacrylic acid ester, in molar contents according to the invention.

According to one preferred embodiment of the invention, the first methacrylic acid ester corresponds to the formula (I) where Z is a carbon-based chain comprising at least 2 carbon atoms, optionally substituted and optionally interrupted by one or more heteroatoms. When the carbon-based chain Z comprises at least 2 carbon atoms, the gain in wet grip is even better. More preferably, the carbon-based chain Z comprises 2 to 20 carbon atoms. More preferably still, the carbon-based chain Z is a hydrocarbon chain, that is to say, the carbon-based chain Z comprises exclusively carbon and hydrogen atoms.

CH2=C(CH3)-COO-Z (I)

Very advantageously, the first methacrylic acid ester corresponds to the formula selected from the group consisting of the formulae (Ia), (Ib), (Ic) and (Id):

CH2=C(CH3)-COO-Z(a) (Ia)

CH2=C(CH3)-COO-Z(b) (Ib)

CH2=C(CH3)-COO-Z(c) (Ic)

CH2=C(CH3)-COO-Z(d) (Id)

**[0025]** where:
Z(a) is the 2-ethylhexyl radical,
Z(b) is the n-octyl radical,
Z(c) is the isodecyl radical,
Z(d) is the n-tridecyl radical.

The formulae (Ia), (Ib), (Ic) and (Id) of the first methacrylic acid ester may be applied to any one of the embodiments of the invention.

When the elastomer A is a polymer of several monomers, the elastomer A is a statistical copolymer.

According to one embodiment of the invention, the elastomer A is an elastomer obtained by radical polymerization, in particular in bulk, in solution or in a disperse medium, especially in emulsion, dispersion or suspension. Radical polymerization, especially in bulk, in solution or in a dispersed medium, is a process well known to a person skilled in the art of polymer synthesis. The choice of one or other of these three processes may be guided, for example, by the reactivity of the monomers to be polymerized, the polymerization kinetics or the exothermicity of the polymerization reaction. For the choice of the polymerization process, reference may, for example, be made to the following publications, which are: Macromolecules, 1998, 31, 2822-2827; Macromolecules, 2006, 39, 923-930; J. Am. Chem. Soc. 1951, 73, 5736. This embodiment may be applied to any one of the embodiments of the invention.

The elastomer matrix is reactive to the crosslinking system. This essential feature means that the elastomer matrix has sites that are reactive to the crosslinking system. In other words, the elastomer matrix comprises at least one elastomer that has sites that are reactive to the crosslinking system.

According to an embodiment of the invention, the sites of the elastomer matrix that are reactive to the crosslinking system are capable of reacting with the crosslinking system by forming covalent bonds. This embodiment may be applied to any one of the embodiments of the invention.

According to one embodiment of the invention, the elastomer matrix comprises monomer units that are reactive to the crosslinking system. In other words, the reactive sites of the elastomer matrix are the reactive sites of monomer units of the elastomer matrix. According to this embodiment, the elastomer matrix reacts with the crosslinking system by means of monomer units present in at least one of the elastomers of the elastomer matrix and that are reactive to the crosslinking system. The elastomer for which the monomer units are reactive to the crosslinking system may be the elastomer A. In the case that the elastomer A does not have monomer units that are reactive to the crosslinking system, the elastomer matrix comprises a second elastomer B that has monomer units that are reactive to the crosslinking system.

According to one embodiment of the invention, the content of elastomer A in the elastomer matrix is more than 50 phr up and to 100 phr, preferably more than 70 phr and up to 100 phr, more preferably more than 80 phr and up to 100 phr, particularly, the elastomer matrix consists of elastomer A. This embodiment, in its preferred forms or not, may be applied to any one of the embodiments of the invention.

According to a first variant of the invention, the elastomer matrix comprises a (one or more) second elastomer, elastomer B, which comprises monomer units that are reactive to the crosslinking system.

Preferably, the elastomer B is a diene elastomer.

The term "diene" elastomer (or else rubber) should be understood to mean, in a known manner, one (or more) elastomer(s) resulting at least in part (i.e., a homopolymer or a copolymer) of diene monomer units (monomers bearing two carbon-carbon double bonds which may or may not be conjugated).

These diene elastomers can be classified into two categories: "essentially unsaturated" or "essentially saturated". The expression "essentially unsaturated" is generally understood to mean a diene elastomer resulting at least partly from conjugated diene monomers, having a content of units of diene origin (conjugated dienes) that is greater than 15% (mol%). Thus, diene elastomers such as butyl rubbers or diene/α-olefin copolymers of the EPDM type do not fall under the preceding definition and may especially be described as "essentially saturated" diene elastomers (low or very low content of units of diene origin, always less than 15%). In the "essentially unsaturated" diene elastomer category, the expression "highly unsaturated" diene elastomer is understood in particular to mean a diene elastomer having a content of units of diene origin (conjugated dienes) that is greater than 50%.

Having given these definitions, it will be understood more particularly that a diene elastomer capable of being used in the compositions in accordance with the invention means:
(a) - any homopolymer of a conjugated diene monomer, especially any homopolymer obtained by polymerization of a conjugated diene monomer having from 4 to 12 carbon atoms;
(b) - any copolymer obtained by copolymerization of one or more conjugated dienes with one another or with one or more vinylaromatic compounds having from 8 to 20 carbon atoms;
(c) - a ternary copolymer obtained by copolymerization of ethylene and of an α-olefin having from 3 to 6 carbon atoms with an unconjugated diene monomer having from 6 to 12 carbon atoms, such as, for example, the elastomers obtained from ethylene and propylene with an unconjugated diene monomer of the abovementioned type, such as, in particular, 1,4-hexadiene, ethylidene norbornene or dicyclopentadiene;
(d) - an unsaturated olefinic copolymer, the chain of which comprises at least olefinic monomer units, that is to say units derived from the insertion of at least one α-olefin or ethylene, and diene monomer units derived from at least one conjugated diene;
(e) - a copolymer of isobutene and of isoprene (butyl rubber) and also the halogenated versions, in particular chlorinated or brominated versions, of this type of copolymer.

Although it applies to any type of diene elastomer, a person skilled in the art of tires will understand that the present invention is preferably employed with essentially unsaturated diene elastomers, in particular of the type (a) or (b) above.

In the case of copolymers of type (b), these contain from 20% to 99% by weight of diene units and from 1% to 80% by weight of vinylaromatic units.

The following are suitable in particular as conjugated dienes: 1,3-butadiene, 2-methyl-1,3-butadiene, 2,3-di(C₁-C₅ alkyl)-1,3-butadienes, such as, for example, 2,3-dimethyl-1,3-butadiene, 2,3-diethyl-1,3-butadiene, 2-methyl-3-ethyl-1,3-butadiene or 2-methyl-3-isopropyl-1,3-butadiene, an aryl-1,3-butadiene, 1,3-pentadiene or 2,4-hexadiene.

The following, for example, are suitable as vinylaromatic compounds: styrene, ortho-, meta-or para-methylstyrene, the "vinyltoluene" commercial mixture, para-(tert-butyl)styrene, methoxystyrenes, chlorostyrenes, vinylmesitylene, divinylbenzene or vinylnaphthalene.

More preferably, the elastomer B is an essentially unsaturated diene elastomer selected from the group consisting of polybutadienes, polyisoprenes, butadiene copolymers, isoprene copolymers and mixtures of these elastomers. The following are very particularly suitable as diene elastomer: a polybutadiene (BR), a copolymer of 1,3-butadiene and styrene (SBR), a natural rubber (NR) or a synthetic polyisoprene (IR) preferably having a molar content of cis-1,4- bonds of greater than 90%.

According to one embodiment of the first variant of the invention, the elastomer matrix consists of the elastomer A and of the elastomer B.

According to an embodiment of the first variant of the invention, the monomer units of the first methacrylic acid ester present in the elastomer A represent 100 mol% of the monomer units of the elastomer A. In the case that the first methacrylic acid ester is a mixture of methacrylic acid esters, the elastomer A is a copolymer of these methacrylic acid esters. In the case that the first methacrylic acid ester consists of a single methacrylic acid ester, the elastomer A is a homopolymer of the first methacrylic acid ester. Advantageously, the elastomer A is a homopolymer of 2-ethylhexyl methacrylate, a homopolymer of n-octyl methacrylate, a homopolymer of isodecyl methacrylate or a homopolymer of n-tridecyl methacrylate. This embodiment may be applied to any one of the embodiments of this first variant of the invention.

According to one particular embodiment of the first variant of the invention, the elastomer A may comprise, in addition to the monomer units of the first methacrylic acid ester, vinylaromatic units, in particular styrene monomer units.

According to a second variant of the invention, the elastomer A comprises monomer units that are reactive to the crosslinking system.

Preferably, the elastomer A comprises monomer units of a (one or more) second monomer, which monomer units are reactive to the crosslinking system. The proportion of monomer units of the second monomer in the elastomer A is adjusted by a person skilled in the art as a function of the reactivity of the monomer units of the second monomer to the crosslinking system and also of the targeted degree of crosslinking of the rubber composition.

The monomer units of the second monomer are suitably chosen by a person skilled in the art as a function of the reactivity of the crosslinking system. When the crosslinking system comprises a compound having at least two nucleophilic groups, the monomer units of the second monomer are electrophilic, that is to say the monomer units of the second monomer bear an electrophilic group; and vice versa when the crosslinking system comprises a compound having at least two electrophilic groups, the monomer units of the second monomer are preferably nucleophilic, that is to say the monomer units of the second monomer bear a nucleophilic group. The imide group, the epoxy group or the carbonate group are suitable, for example, as the electrophilic group. As nucleophilic group, mention may be made of the NH₂ group or the OH group, in particular that of alcohols or carboxylic acids. When the crosslinking system is based on sulphur, on peroxide or on bismaleimide, the monomer units in the second monomer may contain at least one carbon-carbon double bond that reacts in particular via a radical pathway with the crosslinking system. Thus, the monomer units of the second monomer contain, for example, at least one NH₂, OH, imide, carbonate or epoxy group or a carbon-carbon double bond.

More preferably, the elastomer A is preferably a copolymer of the first methacrylic acid ester and of the second monomer. In other words, the monomer units that form the elastomer A consist of the monomer units of the first methacrylic acid ester and the monomer units of the second monomer.

As second monomer having monomer units containing at least one carbon-carbon double bond, mention may be made of 1,3-dienes, especially 1,3-butadiene and isoprene. Typically, the proportion of 1,3-diene monomer units in the elastomer A is at least 2 moles per 100 moles of monomer units of the elastomer A, for example it varies within a range extending from 2 to 80 moles per 100 moles of monomer units of the elastomer A.

As second monomer, mention may also be made of the methacrylic acid esters, which esters bear a site that is reactive to the crosslinking system within their monomer unit. Mention may be made of those having at least one carbon-carbon double bond such as dicyclopentadienyloxyethyl methacrylate. Mention may also be made of the esters that bear an imide, carbonate or epoxy group such as N-hydroxysuccinimide methacrylate, glycerol carbonate methacrylate and glycidyl methacrylate. Typically the proportion of monomer units of these methacrylic acid esters bearing a site that is reactive to the crosslinking system is at least 0.2 mole per 100 moles of monomer units, more preferably between 0.2 and 10 moles per 100 moles of monomer units of the elastomer A. This content is adjusted by a person skilled in the art as a function of the reactivity of the monomer units of the second monomer with respect to the crosslinking system and also of the targeted degree of crosslinking.

According to one particular embodiment of the second variant of the invention, the elastomer A may comprise, in addition to the monomer units of the second monomer, vinylaromatic units, in particular styrene monomer units.

In addition to the elastomer A that is reactive to the crosslinking system, the elastomer matrix may comprise one (one or more) other elastomer C. The elastomer C may be the elastomer B as defined in the first variant of the invention.

According to any one of the embodiments of the second variant of the invention, the content of elastomer A in the elastomer matrix is preferably more than 50 phr and up to 100 phr (that is, a total content of the elastomer(s) other than elastomer A in the elastomer matrix is more than or equal to 0 and less than 50 phr), more preferably more 70 phr and up to 100 phr (that is, the total content of the elastomer(s) other than elastomer A in the elastomer matrix is more or equal to 0 and less than 30 phr), still more preferably more than 80 phr and up to 100 phr (that is, the total content of the elastomer(s) other than elastomer A in the elastomer matrix is more than or equal to 0 and less than 20 phr) .

### 4-2. Crosslinking system

One essential feature of the rubber composition in accordance with the invention is to comprise a crosslinking system.

The choice of the crosslinking system is made as a function of the chemical structure of the reactive sites borne by the elastomer matrix, as mentioned above. The content of compound(s) that form the crosslinking system introduced into the rubber composition is adjusted by a person skilled in the art as a function of the targeted degree of crosslinking of the rubber composition and of the chemical nature of the crosslinking system. This crosslinking content is defined according to the desired rigidity of the rubber composition in the crosslinked state, this rigidity varying according to the envisaged application of the rubber composition.

For example, when the crosslinking system is a system based on sulphur, it is possible for the sulphur to be provided by a sulphur donor, the crosslinking system is preferably a vulcanization system, that is to say a system based on sulphur (or on a sulphur-donating agent) and on a primary vulcanization accelerator. Various known vulcanization activators or secondary accelerators such as zinc oxide, stearic acid or equivalent compounds, guanidine derivatives (in particular diphenylguanidine), or else known vulcanization retarders, come to be added this base vulcanization system, being incorporated during the first non productive phase and/or during the productive phase as described later on. Mention may be made, as (primary or secondary) vulcanization accelerator, of any compound capable of acting as an accelerator for the vulcanization of diene elastomers in the presence of sulphur, especially accelerators of thiazole type and also derivatives thereof, and accelerators of sulphenamide, thiurame, dithiocarbamate, dithiophosphate, thiourea and xanthate type. The sulphur is used at a preferred content of between 0.5 and 12 phr, in particular between 1 and 10 phr. The primary vulcanization accelerator is used in the rubber composition at a preferred content of between 0.5 and 10 phr, more preferably between 0.5 and 5.0 phr.

When the crosslinking system comprises a compound having at least two nucleophilic or electrophilic reactive groups as defined above, the amount of crosslinking system introduced into the rubber composition is linked to the number of moles of reactive groups of this compound with respect to the number of reactive sites of the elastomer matrix. The amount of this compound introduced into the rubber composition preferably varies from 0.05 to 5, more preferably from 0.05 to 2 molar equivalents of nucleophilic or electrophilic reactive groups of this compound per one mole of reactive site of the elastomer matrix. These preferred ranges may be applied to any one of the embodiments of the second variant of the invention.

In the choice of the compound belonging to the crosslinking system having at least two nucleophilic or electrophilic reactive groups depending on the reactivity of the elastomer A, reference may be made to the article "Chemical modification of polymers Part II. Attachment of carboxylic acid containing molecules to polymers" by J. C. Soutif and J. C. Brosse in Reactive Polymers, 12 (1990) 133-153 and also to the article "Reactive Applications of Cyclic Alkylene Carbonates" by John H. Clements in Industrial & Engineering Chemistry Research 2003 42, 4, 663-674). The first article presents functions are reactive to epoxy groups, the second presents functions are reactive to carbonates, especially acids, alcohols and amines.

As a compound belonging to the crosslinking system that has at least two groups reactive to the elastomer A, mention may be made of polyacids, in particular diacids, or the dehydrated forms thereof, namely anhydrides, and polyamines, in particular diamines. For example, as polyacids are commercially available and useful for the requirements of the invention, mention may be made of oxalic acid, succinic acid, adipic acid, sebacic acid, dodecanedioic acid, terephthalic acid, trimesic acid and 3,4-bis(carboxymethyl)-cyclopentanecarboxylic acid. As polyamines, mention may be made, for example, of 1,6-diaminohexane, 1,8-diaminooctane and the family of "Jeffamines" from Huntsman, in which a person skilled in the art will know how to choose the most suitable polyamine compared with the expected properties of the crosslinked rubber composition.

### 4-3. Reinforcing filler

Use may be made of any type of filler known for its capabilities of reinforcing a rubber composition which can be used for the manufacture of tires, for example a reinforcing organic filler, such as carbon black, or a reinforcing inorganic filler such as silica, with which a coupling agent is combined in a known way.

Such a reinforcing filler typically consists of nanoparticles, the mean size (by weight) (see, for example, ISO-13320-1 Particle size analysis-Laser diffraction methods), of which is less than 1 micrometer, generally less than 500 nm, most often between 20 and 200 nm, in particular and more preferably between 20 and 150 nm.

All carbon blacks, especially blacks of the HAF, ISAF or SAF type, conventionally used in treads for tires ("tire-grade" blacks) are suitable as carbon blacks. Among the latter, mention will more particularly be made of the reinforcing carbon blacks of the 100, 200 or 300 series (ASTM grades), such as for example the N115, N134, N234, N326, N330, N339, N347 or N375 blacks. The carbon blacks may be used in the isolated state, as available commercially, or in any other form, for example as a support for some of the rubber additives used.

Mention may be made, as examples of organic fillers other than carbon blacks, of the functionalized polyvinyl organic fillers as described in Applications WO 2006/069792, WO 2006/069793, WO2008/003434 and WO2008/003435.

The expression "reinforcing inorganic filler" should be understood here as meaning any inorganic or mineral filler, whatever its color and its origin (natural or synthetic), also known as "white filler", "clear filler" or even "non-black filler" in contrast to carbon black, this inorganic filler being capable of reinforcing by itself alone, without means other than an intermediate coupling agent, a rubber composition intended for the manufacture of tires in other words capable of replacing, in its reinforcing role, a conventional tire-grade carbon black; such a filler is generally characterized, in a known manner, by the presence of hydroxyl (-OH) groups at its surface.

Mineral fillers of the siliceous type, preferably silica (SiO2), are suitable in particular as reinforcing inorganic fillers. The silica used may be any reinforcing silica known to a person skilled in the art, in particular any precipitated or pyrogenic silica having a BET surface area and a CTAB specific surface area that are both less than 450 m²/g, preferably from 30 to 400 m²/g, in particular between 60 and 300 m²/g.

Mention will be made, as highly dispersible ("HD precipitated silicas"), for example, of the Ultrasil 7000 and Ultrasil 7005 silicas from Evonik, the "Zeosil" 1165MP, 1135MP and 1115MP silicas from Rhodia, the "Hi-Sil" EZ150G silica from PPG, the "Zeopol" 8715, 8745 and 8755 silicas from Huber.

As reinforcing inorganic filler, mention will also be made of mineral fillers of the aluminous type, in particular alumina (Al2O3), or aluminium (oxide)hydroxides, or else reinforcing titanium oxides, for example described in WO 99/28376 (US 6 610 261) and WO 00/73372 (US 6 747 087).

Mention may be made, as examples of reinforcing aluminas, of the "Baikalox A125" or "Baikalox CR125" aluminas from Baïkowski, the "APA-100RDX" alumina from Condea, the "Aluminoxid C" alumina from Degussa or the "AKP-G015" alumina from Sumitomo Chemicals.

The physical state in which the reinforcing inorganic filler is provided is not important, whether it is in the form of a powder, of micropearls, of granules or else of beads. Of course, the expression "reinforcing inorganic filler" is also understood to mean mixtures of various reinforcing inorganic fillers, in particular of highly dispersible silicas as described below.

A person skilled in the art will understand that a reinforcing filler of another nature, in particular an organic filler, such as carbon black, might be used as filler equivalent to the reinforcing inorganic filler described in the present section, provided that this reinforcing filler is covered with an inorganic layer, such as silica, or else comprises, at its surface, functional sites, in particular hydroxyl sites, requiring the use of a coupling agent in order to form the bond between the filler and the elastomer. Mention may be made, by way of example, for example, of carbon blacks for tires, such as described, for example, in patent documents WO 96/37547 and WO 99/28380.

Preferably, the content of reinforcing filler is between 40 and 200 phr. Below 40 phr, the reinforcement of the rubber composition is insufficient to provide an adequate level of cohesion or of wear resistance of the rubber composition. Above 200 phr, there is a risk of increasing the hysteresis and therefore the rolling resistance of the tires. For this reason, the content of reinforcing filler is advantageously within a range from 60 to 160 phr, more advantageously from 80 to 120 phr. These preferred ranges for the content of reinforcing filler may be applied to any one of the embodiments of the invention.

According to one embodiment of the invention, the reinforcing filler comprises a carbon black.

According to another embodiment of the invention, the reinforcing filler comprises a reinforcing inorganic filler, preferably a silica.

According to one preferred embodiment of the invention, the content of reinforcing inorganic filler such as silica is from 60 to 160phr, more preferably from 70 to 140 phr, more preferably from 80 to 120 phr.

According to another preferred embodiment of the invention, the reinforcing filler comprises more than 50% (more preferably 80%) by weight of a reinforcing inorganic filler, which means that the reinforcing inorganic filler constitutes more than 50% (more preferably, more than 80%) by weight of the reinforcing filler in the rubber composition according to the invention. This reinforcing inorganic filler is preferably a silica. This embodiment wherein the silica constitutes preferably more than 50% (more preferably, more than 80%) by weight of the reinforcing filler in the rubber composition may apply to any one of the embodiments of the invention.

According to one particular embodiment of the invention, the reinforcing inorganic filler such as silica represents more than 50% by weight of the reinforcing filler, the carbon black is used preferably at a content of less than 20 phr, more preferably less than 10 phr (for example between 0.5 and 20 phr, especially between 2 and 10 phr), more preferably still less than 5 phr. Within the intervals indicated, benefit is derived from the coloring properties (black pigmenting agent) and UV resistant properties of the carbon blacks, without moreover, penalizing the typical performances introduced by the reinforcing inorganic filler.

In order to couple the reinforcing inorganic filler to at least one of the elastomers that constitute the elastomer matrix of the rubber composition, especially in the case that the inorganic filler constitutes more than 50% by weight of the reinforcing filler of the rubber composition, use is generally made, in a known manner, of a coupling agent (or bonding agent).

The expression "coupling agent" is understood more specifically to mean an agent capable of establishing a sufficient bond of chemical and/or physical nature between the filler in question and the elastomer, while facilitating the dispersion of this filler within the elastomer matrix.

This coupling agent, at least bifunctional coupling agent (or bonding agent) is intended to ensure a sufficient connection, of chemical and/or physical nature, between the inorganic filler (surface of its particles) and the elastomer.

Use is made, in particular, of organosilanes, especially alkoxysilane polysulphides or mercaptosilanes, or else polyorganosiloxanes bearing functions capable of bonding physically and/or chemically to the inorganic filler and functions capable of bonding physically and/or chemically to the elastomer, for example by means of a sulphur atom. Silica/elastomer bonding agents, in particular, have been described in a large number of documents, the best known being bifunctional alkoxysilanes such as alkoxysilane polysulphides.

Use is made, in particular, of silane polysulphides, referred to as "symmetrical" or "asymmetrical" depending on their particular structure, as described for example in applications WO 03/002648 (or US 2005/016651) and WO 03/002649 (or US 2005/016650).

Mention will in particular be made, as coupling agent other than alkoxysilane polysulphide, of bifunctional POSs (polyorganosiloxanes) or else of hydroxysilane polysulphides as described in patent applications WO 02/30939 (or US 6,774,255) and WO 02/31041 (or US 2004/051210), or else of silanes or POSs bearing azodicarbonyl functional groups, as described for example in patent applications WO 2006/125532, WO 2006/125533 and WO 2006/125534.

The content of coupling agent, whether it is a single compound or a mixture of compounds, is advantageously less than 20 phr, it is understood that it is generally desirable to use the least amount possible thereof. Typically, the content of coupling agent represents from 0.5% to 15% by weight relative to the amount of inorganic filler. Its content is preferably between 0.5 and 12 phr, more preferably from 3 to 10 phr. This content is easily adjusted by a person skilled in the art depending on the content of inorganic filler used in the composition.

### 4-4. Liquid plasticizer

The rubber composition according to the invention has the other essential characteristic of comprising more than 35 phr of a liquid plasticizer. The liquid plasticizer is liquid at 20°C (under atmospheric pressure) by definition. The role of the liquid plasticizer is to soften the matrix by diluting the elastomer and the reinforcing filler.

Regarding the content of the liquid plasticizer, below the indicated minimum, the targeted technical effect is insufficient. Preferably, the content of liquid plasticizer is less than 100 phr (notably between 35 and 100 phr) because there is a risk of worsening processability over 100 phr. For these reason, the content of the liquid plasticizer is more preferably less than 80phr (notably between 35 and 80phr).

Another essential feature of the rubber composition according to the invention is that the liquid plasticizer has a Tg of less than -65°C (notably between -65°C and -145°C), preferably less than -80°C (notably between -80°C and -130°C), more preferably less than - 90°C (notably between -90°C and -120°C), still more preferably less than -100°C (notably between -100°C and -110°C).

Advantageously, the liquid plasticizer is a vegetable oil or a phosphate plasticizer.

According to one embodiment of the invention, the liquid plasticizer is the vegetable oil.

Mention may be made, as examples of the vegetable oil, of an oil selected from the group consisting of linseed oil, safflower oil, soybean oil, corn oil, cottonseed oil, turnip seed oil, castor oil, tung oil, pine oil, sunflower oil, palm oil, olive oil, coconut oil, groundnut oil and grapeseed oil, and mixtures of these oils. Sunflower oil is preferred.

The vegetable oil may be made up in large part of an unsaturated C₁₈ fatty acid, that is to say an unsaturated fatty acid chosen from the group consisting of oleic acid, linoleic acid, linolenic acid and the mixtures of these acids.

The vegetable oil is preferably rich in oleic acid, that is to say that the fatty acid (or all of the fatty acids if several are present) from which the vegetable oil derives, comprises oleic acid in a weight fraction at least equal to 60%, more preferably at least equal to 70%, still more preferably at least equal to 80% and particularly at least equal to 90%.

As the vegetable oil, use is advantageously made of a sunflower oil which is such that all of the fatty acids from which the vegetable oil derives comprise oleic acid in a weight fraction greater than or equal to 60%, preferably 70%, more preferably 80% and, according to one particularly advantageous embodiment of the invention, in a weight fraction greater than or equal to 90%.

According to a preferred embodiment of the invention, the liquid plasticizer is the phosphate plasticizer.

Mention may be made, as the liquid phosphate plasticizers for example, of those that contain between 12 and 30 carbon atoms, for example trialkyl phosphate having between 12 and 30 carbon atoms. The number of carbon atoms of trialkyl phosphate should be taken to mean the total number of carbon atoms of three alkyl groups. The three alkyl groups of trialkyl phosphate may be the same or different each other. The term "alkyl" used herein refers to a straight or branched alkyl group, which may contain a hetero atom such as an oxygen atom in its chain, or which may be substituted with a halogen atom such as fluorine, chlorine, bromine or iodine. The trialkyl phosphate may have one or two phenyl groups of instead of alkyl groups.

Preferably, the liquid phosphate plasticizer is trialkyl phosphate having between 12 and 30 carbon atoms.

Mention may be made, as examples of the trialkyl phosphate, of an oil selected from the group consisting of trimethyl phosphate, triethyl phosphate, tributyl phosphate, trioctyl phosphate (especially, tris(2-ethylhexyl) phosphate), tris(2-butoxyethyl) phosphate, tris(2-chloroethyl) phosphate, 2-ethylhexyl diphenyl phosphate, and the mixtures thereof.

More preferably, the liquid phosphate plasticizer is tris(2-ethylhexyl) phosphate. The liquid plasticizer is commercially available; for example, product name: Disflmoll TOF (Tg= - 105°C) provided by Lanxess co., ltd.

In a manner known to a person skilled in the art, the designation "resin" is reserved in the present application, by definition, for a compound which is solid at ambient temperature (20°C) under atmosphere pressure, in contrast to a liquid plasticizing compound, such as an oil.

According to another embodiment, the rubber composition according to the invention is devoid of or further comprises a hydrocarbon plasticizing resin, the content of a hydrocarbon plasticizing resin is preferably less than 60 phr (that is more than or equal to 0 phr and less than 60 phr), more preferably less than 50 phr (that is more than or equal to 0 phr and less than 50 phr), still more preferably less than 40 phr (that is more than or equal to 0 phr and less than 40 phr) of any plasticizing hydrocarbon resin(s).

Hydrocarbon resin(s) are polymers well known to those skilled in the art, essentially based on carbon and hydrogen but which may comprise other types of atoms, which can be used in particular as plasticizer or tackifiers in polymeric matrices. They are by nature miscible (i.e., compatible) in the contents used with the polymer compositions for which they are intended, so as to act as true diluents. They have been described for example in the work entitled "Hydrocarbon Resins" by R. Mildenberg, M. Zander and G. Collin (New York, VCH, 1997, ISBN 3-527-28617-9), Chapter 5 of which is devoted to their applications, especially in rubber tires (5.5. "Rubber Tires and Mechanical Goods"). They may be aliphatic, cycloaliphatic, aromatic, hydrogenated aromatic, of the aliphatic/aromatic type, i.e., based on aliphatic and/ or aromatic monomers. They may be natural or synthetic resins, whether or not based on petroleum (if such is the case, they are also known as petroleum resins). Their Tg is preferably above 0°C, in particular above 20°C (usually between 30°C and 95°C).

In a known manner, these hydrocarbon resins may also be termed thermoplastic resins in the sense that they soften when heated and may thus be molded. They may also be defined by a softening point or temperature. The softening point of a hydrocarbon resin is generally about 50°C to 60°C higher than its Tg value. The softening point is measured according to standard ISO 4625 (ring-and-ball method). The macrostructure (Mw, Mn and Ip) is determined by size exclusion chromatography (SEC) as indicated below.

To recapitulate, SEC analysis, for example, consists in separating the macromolecules in solution according to their size through columns filled with a porous gel; the molecules are separated according to their hydrodynamic volume, the bulkiest being eluted first. The sample to be analyzed is simply dissolved beforehand in an appropriate solvent, tetrahydrofuran, at a concentration of 1 g/liter. The solution is then filtered through a filter with a porosity of 0.45 µm, before injection into the apparatus. The apparatus used is, for example, a "Waters Alliance" chromatographic line according to the following conditions:
elution solvent is tetrahydrofuran,
temperature: 35°C;
concentration: 1 g/litre;
flow rate: 1 ml/min;
injected volume: 100 µl;
Moore calibration with polystyrene standards;
set of 3 "Waters" columns in series ("Styragel HR4E", "Styragel HRl" and "Styragel HR 0.5");
detection by differential refractometer (for example "WATERS 2410") which may be equipped with operating software (for example "Waters Millenium").

A Moore calibration is carried out with a series of commercial polystyrene standards having a low Ip (less than 1.2), with known molar masses, covering the range of masses to be analyzed. The weight-average molar mass (Mw), the number-average molar mass (Mn) and the polydispersity index (Ip:Mw/Mn) are deduced from the data recorded (curve of distribution by mass of the molar masses).

All the values for molar masses shown in the present application are thus relative to calibration curves produced with polystyrene standards.

Preferably, the plasticizing hydrocarbon resin exhibits at least any one, more preferably all, of the following characteristics:
a Tg of above 25°C (in particular between 25°C and 100°C), more preferably above 30°C (in particular between 30°C and 95°C);
a softening point above 50°C (in particular between 50°C and 150°C);
a number-average molar mass (Mn) between 400 and 2000 g/mol, preferably between 500 and 1500 g/mol;
a polydispersity index (Ip) of less than 3, preferably of less than 2 (reminder: Ip:Mw/Mn with Mw the weight average molar mass).

As examples of such hydrocarbon resin(s), mention may be made of those chosen from the group consisting of cyclopentadiene (abbreviated to CPD) homopolymer or copolymer resins, dicyclopentadiene (abbreviated to DCPD) homopolymer or copolymer resins, terpene homopolymer or copolymer resins, C fraction homopolymer or copolymer resins, C₉ fraction homopolymer or copolymer resins, alpha-methyl styrene homopolymer or copolymer resins and the mixtures thereof. Use is more preferably made, among the above copolymer resins, of those chosen from the group consisting of (D)CPD/vinylaromatic copolymer resins, (D)CPD/terpene copolymer resins, (D)CPD/C₅ fraction copolymer resins, (D)CPD/C₉ fraction copolymer resins, terpene/vinylaromatic copolymer resins, terpene/phenol copolymer resins, C₅ fraction/vinyl-aromatic copolymer resins, C₉ fraction/vinylaromatic copolymer resins, and the mixtures thereof.

The term "terpene" combines here, in a known way, the α-pinene, β-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, α-methylstyrene, ortho-, meta- or para-methylstyrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a C₉ fraction (or more generally from a C₈ to C₁₀ fraction) are suitable, for example, as vinylaromatic monomer. Preferably, the vinylaromatic compound is styrene or a vinylaromatic monomer resulting from a Cfraction (or more generally from a C₈ to C₁₀ fraction). Preferably, the vinylaromatic compound is the minor monomer, expressed as molar fraction, in the copolymer under consideration.

More particularly, mention may be made of resins selected from the group consisting of (D)CPD homopolymer resins, (D)CPD/ styrene copolymer resins, polylimonene resins, limonene/ styrene copolymer resins, limonene/D(CPD) copolymer resins, C₅ fraction/styrene copolymer resins, C₅ fraction /C₉ fraction copolymer resins and blends of these resins.

All the above resins are well known to those skilled in the art and are commercially available, for example sold by DRT under the name "Dercolyte" as regards polylimonene resins, sold by Neville Chemical Company under the name "Super Nevtac", by Kolon under the name "Hikorez" or by Exxon Mobil under the name "Escorez" as regards C₅ fraction /styrene resins or C₅ fraction/C₉ fraction resins, or else by Struktol under the name "40 MS" or "40 NS" (blends of aromatic and/or aliphatic resins).

### 4-5. Various Additives

The rubber composition according to the invention may also likewise comprise all or some of the usual additives customarily used in the rubber compositions intended for the manufacture of tires, such as, for example pigments, protective agents such as antiozone waxes, chemical antiozonants, antioxidants, antifatigue agents and mixtures of such compounds.

The rubber composition according to the invention may also contain coupling activators, agents for covering the inorganic fillers or more generally processing aids capable, in a known manner, by virtue of an improvement in the dispersion of the filler in the rubber matrix and of a reduction in the viscosity of the rubber composition, of improving their ease of processing in the uncured state, these agents or aids being, for example, hydrolysable silanes such as alkylalkoxysilanes, polyols, polyethers, primary, secondary or tertiary amines, or hydroxylated or hydrolysable polyorganosiloxanes.

### 4-6. Manufacture of the Rubber Compositions and of the Treads

The rubber composition according to the invention may be manufactured in appropriate mixers, generally using two successive preparation phases well known to a person skilled in the art: a first phase of thermomechanical working or kneading (referred to as "non-productive" phase) at high temperature, up to a maximum temperature of between 110°C and 190°C, preferably between 120°C and 180°C, followed by a second phase of mechanical working (referred to as "productive" phase) up to a lower temperature, typically of less than 110°C, for example between 40°C and 100°C, finishing phase during which the crosslinking system is incorporated.

The rubber composition according to the invention may be prepared according to a process that comprises the following steps:
- thermomechanically kneading the elastomer matrix, the reinforcing filler, the liquid plasticizer, where appropriate the coupling agent, and the other additives of the rubber composition with the exception of the crosslinking system, until a maximum temperature of between 110°C and 190°C is reached;
- cooling the combined mixture to a temperature below 100°C;
- subsequently incorporating the crosslinking system;
- kneading everything up to a maximum temperature below 110°C in order to obtain a rubber composition.

After incorporating all the ingredients of the rubber composition, the final composition thus obtained is then calendered, for example in the form of a sheet or slab, in particular for laboratory characterization, or else extruded, in order to form, for example, a rubber profiled element that is used as rubbery component, in particular for the manufacture of the tire. The rubber composition in accordance with the invention may be used in calendering form in a tire. The calendering or the extrudate formed from the rubber composition wholly or partly forms a semi-finished product, in particular of a tire.

Thus, according to one particular embodiment of the invention, the rubber composition in accordance with the invention, that may be either in the uncured state (before crosslinking or vulcanization), or in the cured state (after crosslinking or vulcanization), is in a tire, for example in a tire tread.

The crosslinking (or curing), where appropriate the vulcanization, is carried out, in a known manner, at a temperature generally between 130°C and 200°C for a sufficient time, which may vary for example between 5 and 120 min, depending in particular on the curing temperature, on the crosslinking system adopted and on the crosslinking kinetics of the composition in question.

The tire tread, another subject of the invention, has the essential feature of being wholly or partly formed from the rubber composition in accordance with the invention. The tread may be manufactured according to the process described above which comprises an additional step of calendering or extruding the rubber composition.

The invention also relates to the tread described above both in the uncured state (i.e. before curing) and in the cured state (i.e. after crosslinking or vulcanization).

The invention also relates to the tire comprising a semi-finished article in accordance with the invention, which tire is both in the uncured state and in the cured state, the semi-finished article preferably being a tread.

The invention is further illustrated by the following non-limiting examples.

### 5. EXEMPLARY EMBODIMENTS OF THE INVENTION

### 5-1. Measurements and tests used:

### 5-1-1. Determination of the glass transition temperature of the elastomers:

The glass transition temperatures, Tg, of the polymers are measured by means of a differential calorimeter (differential scanning calorimeter) according to the standard ASTM D3418-08.

### 5-1-2. Determination of the microstructure of the elastomers by NMR analysis:

The determination of the content of methacrylate units is carried out by ¹H NMR analysis. The spectra are acquired on a BRUKER Avance 500 MHz spectrometer equipped with a BBFO z-grad 5 mm "broad band" cryoprobe for the soluble samples and with an HRMAS 4mm ¹H/¹³C probe for the insoluble crosslinked samples.

The quantitative ¹H NMR experiment uses a 30° single pulse sequence and a repetition time of 5 seconds between each acquisition. The samples are dissolved in deuterated chloroform.

The edited HSQC ¹J ¹H/¹³C 2D NMR correlation spectrum makes it possible to verify the structure of the methacrylate units owing to the chemical shifts of the carbon atoms and protons. ¹H/¹³C HMBC ³J long-range correlation spectra make it possible to consolidate this information. ¹³C ID NMR spectra make it possible to verify the chaining of the units (diads and triads) and to attain the tacticity of the copolymers.

The chemical shifts are calibrated with respect to the protonated impurity of the chloroform with respect to tetramethylsilane , TMS (¹H δppm and ¹³C δppm at 0 ppm).

### 5-1-2-1. Attribution of the ¹H NMR signals used for the quantification:

Example of the butadiene/2-ethylhexyl methacrylate copolymers: attribution of the ¹H NMR signals used for the quantification:

**[Table I]**

| δ ¹H (ppm) | Number of protons | Attribution |
|---|---|---|
| 3.4 to 4.0 | 2 | CH₂-O at the alpha position of the ester group of the 2-ethylhexyl methacrylate units |
| 4.6 to 4.9 | 2 | ethylenic CH₂ of the 1,2- (vinyl) units of the butadiene part |
| 4.9 to 5.7 | 1 + 2 | ethylenic CH of the 1,2-unit of the butadiene part and 2 ethylenic CH of the 1,4-unit of the butadiene part. |

### 5-1-3. Determination of the macrostructure of the elastomers by SEC:

The SEC (size exclusion chromatography) technique is used, which makes it possible to separate the macromolecules in solution according to their size through columns filled with a porous gel. The macromolecules are separated according to their hydrodynamic volume, the bulkiest being eluted first.

SEC (PS calibration): SEC is coupled to a refractometer, it gives, in this case, relative information. Starting from commercial standard products, the various number-average molar masses (Mn) and weight-average molar masses (Mw) that characterize the distribution of the molar masses of the polymer may be determined and the polymolecularity index (PI = Mw/Mn) calculated via a Moore calibration. There is no particular treatment of the polymer sample before analysis. The latter is simply dissolved in the elution solvent at a concentration of around 1 g/L. The solution is then filtered through a filter with a porosity of 0.45 µm before injection.

The apparatus used is a "WATERS alliance" chromatographic chain. The elution solvent is either tetrahydrofuran, or tetrahydrofuran + 1 vol.% of diisopropylamine + 1 vol.% of triethylamine, the flow rate is 0.7 mL/min, the temperature of the system is 35°C and the analysis time is 90 min. A set of four WATERS columns (1 Styragel HMW7 column + 1 Styragel HMW6E column + 2 Styragel HT6E columns) is used. The injected volume of the solution of polymer sample is 100 µL. The detector is a "WATERS 2414" differential refractometer and the software for processing the chromatographic data is the "WATERS EMPOWER" system.

The average molar masses calculated are relative to a calibration curve produced from commercial polystyrene standards "PSS READY CAL-KIT".

Double detection SEC (universal calibration): SEC is an absolute method if it has double detection composed of a refractometer and a viscometer. In this case, the various number-average molar masses (Mn) and weight-average molar masses (Mw) are determined via a universal calibration. There is no particular treatment of the polymer sample before analysis. The latter is simply dissolved in the elution solvent at a concentration of around 1 g/L. The solution is then filtered through a filter with a porosity of 0.45 µm before injection.

The apparatus used is a "WATERS alliance" chromatographic chain. The elution solvent is either tetrahydrofuran, or tetrahydrofuran + 1 vol.% of diisopropylamine + 1 vol.% of triethylamine, the flow rate is 0.7 mL/min, the temperature of the system is 35°C and the analysis time is 90 min. A set of four WATERS columns (1 Styragel HMW7 column + 1 Styragel HMW6E column + 2 Styragel HT6E columns) is used. The injected volume of the solution of polymer sample is 100 µL. The detector is a TDA 302 appliance from VISCOTEK, is composed of a differential refractometer and of a viscometer. The data are processed with the OMNISEC software.

### 5-1-4. Method for measuring the friction coefficient on snow (snow µ laboratory):

A principle of the friction test is based on a block of a rubber composition that slides at a given condition (for example : a displacement: 0 to 0.03 m, a speed: 0 to 0.5 m/s, and an acceleration: 5 m/s²) over a hard pack snow track, set at less than 0°C (for example equal to -10°C) with a CTI penetrometer reading of about 90 in accordance with to Standard ASTM F1805, with an imposed load (for example: 200 to 300 kPa). The forces generated in a direction of travel (Fx) of the block and in another direction perpendicular to the travel (Fz) are measured. The Fx/Fz ratio determines the friction coefficient of the test specimen on the snow. This test, the principle of which is well known to a person skilled in the art (see, for example, an article entitled "Investigation of rubber friction on snow for tires" written by Sam Ella, Pierre-Yves Formagne, Vasileios Koutsos and Jane R. Blackford (38th LEEDS-Lyons Symposium on tribology, Lyons, 6-9 Sep. 2011)) makes it possible to evaluate, under representative conditions, the grip on ice/snow which would be obtained after a running test on a vehicle fitted with tires whose tread is composed of the same rubber compositions.

### 5-1-5. Method for measuring the friction coefficient on wet (wet µ laboratory):

The measurements of the dynamic friction coefficient are carried out according to a method identical to that described by L. Busse, A. Le Gal, and M. Küppel (Modelling of Dry and Wet Friction of Silica Filled Elastomers on Self-Affine Road Surfaces, Elastomere Friction, 2010, 51, p. 8). The test specimens are produced by molding, then crosslinking of a square rubbery support (50 mm x 50 mm) having a thickness of 6 mm. After closing the mold, the latter is placed in a press with heated platens at the temperature (typically 150°C), and for the time that is necessary for the crosslinking of the material (typically several tens of minutes), at a pressure of 16 bar. The ground used for carrying out these measurements is a core removed from an actual road surface made of asphalt concrete of BBTM (very thin asphalt concrete) type (standard NF P 98-137). In order to prevent the phenomena of dewetting and the appearance of secondary grip forces between the ground and the material, the ground + test specimen system is immersed in a 5% aqueous solution of a surfactant (Sinnozon - CAS number: 25155-30-0). The temperature of the aqueous solution is regulated using a thermostatic bath. The test specimen is subjected to a sliding movement in translation parallel to the plane of the ground. The sliding velocity SV is set for example at 0.09 m/sec. The applied normal stress σₙ is for example 400 kPa. These conditions are described hereinbelow by "wet ground conditions". The tangential stress σₜ opposed to the movement of the test specimen over the ground is measured continuously. The ratio between the tangential stress σₜ and the normal stress σₙ gives the dynamic friction coefficient µ. The values indicated in the examples are the dynamic friction coefficient values measured at an aqueous solution temperature (5°C), obtained at steady state after stabilization of the value of the tangential stress σₜ.

### 5-2. Preparation of the elastomers:

### 5-2-1. Synthesis of elastomer E1 (1,3-butadiene/2-ethylhexyl methacrylate copolymer):

The reaction took place in a 100-litre reactor. 0.7 kg (5 phr) of sodium stearate were dissolved in 27 litres of demineralized water. 6.29 g of tert-dodecyl mercaptan (0.05 equivalent of transfer agent to the potassium persulphate), 3.01 kg of butadiene and 11 kg of 2-ethylhexyl methacrylate were added to the reaction medium. The reactor was heated at 50°C with a stirring speed of 80 rpm, before introducing 0.168 kg (1.2 phr) of potassium persulphate. After 95 minutes of polymerization reaction, 61% conversion of monomers to copolymer was achieved. The reaction was then stopped by addition of 0.42 kg (3 phr) of resorcinol. A mixture of antioxidants of 4,4'-methylenebis(2,6-tert-butylphenol) and N-(1,3-dimethylbutyl)-N'-phenyl-p-phenylenediamine (20 wt%/80 wt%) prepared in the melt state and diluted in water and surfactant (sodium stearate), (0.5 phr) was then added to the copolymer latex. The antioxidized latex was then transferred to a stripping column to which 0.2 phr of Foamaster antifoaming agent were added in order to prevent foaming of the emulsion during the stripping. The stripping step was carried out at 100°C. The stripped polymer solution was added slowly to a solution of aluminium sulphate (14 phr of destabilizing agent with respect to the polymer) in water while stirring at 100 rpm. Polymer particles were formed that rise to the surface as soon as the stirring was stopped. These particles were washed until the pH reaches a value of 7. The polymer particles were recovered and dried on a screw at a temperature above 100°C. 8.4 kg of copolymer based on butadiene and 2-ethylhexyl methacrylate were recovered with a volatiles content of less than 0.5%.

The copolymer obtained had the following characteristics:
Tg = -53 °C;
Mn = 254 100 g/mol (PS calibration) and PI = 3.4;
molar % (2-ethylhexyl methacrylate monomer unit) = 45.5;
molar % (butadiene monomer unit) = 54.5.

### 5-3. Preparation of the rubber compositions of the Treads:

The formulations (in phr) of compositions C1 to C4 are described in Table II.

The composition C4 is according to the invention; the compositions C1, C2, C3 and Cr are compositions not according to the invention. The composition C1 comprises SBR1500 as a conventional elastomer. The composition Cr corresponds to the vulcanized composition of the tread of a "Pilot Alpin PA4" tire taken as reference as regards friction coefficient on snow and wet.

The compositions C2, C3 and C4 contain an elastomer which comprises at least 20 mol% of monomer units of a methacrylic acid ester. The elastomer matrices of the compositions C2, C3 and C4 consist of a single elastomer, El.

The sites of the elastomer matrix that are reactive to the crosslinking system are borne by the 1,3-butadiene monomer units of elastomer El in the compositions C2, C3 and C4.

The crosslinking system for the compositions C1, C2, C3 and C4 is a vulcanization system and the crosslinking system consists of sulphur and a sulphenamide.

The liquid plasticizer for the compositions C1, C2, C3 and C4 is tris(2-ethylhexyl)phosphate exhibiting Tg of less than -65°C. A total content of plasticizing system containing the liquid plasticizer and a hydrocarbon plastering resin for the compositions C1, C2 and C3 is 32 phr. The content of liquid plasticizer is 16 phr for the compositions C1 and C2, 32 phr for the composition C3, and 40 phr for the composition C4.

These compositions were manufactured in the following manner: the elastomers, the reinforcing filler comprising the silica and the carbon black, the liquid plasticizer, the coupling agent, and also the various other ingredients with the exception of the crosslinking system, were introduced successively into an internal mixer (final fill ratio: around 70% by volume), the initial vessel temperature of which was around 60°C.

Thermomechanical working (non-productive phase) was then carried out in a step which lasted in total 5 min, until a maximum "dropping" temperature of 165°C was reached.

The mixture thus obtained was recovered, cooled and then the crosslinking system was incorporated on a mixer (homofinisher) at 23°C, everything being mixed (productive phase) for an appropriate time (for example between 5 and 12 min).

The compositions thus obtained were then calendered, either in the form of slabs (having a thickness ranging from 2 to 3 mm) or thin sheets of rubber, for the measurement of their physical or mechanical properties, or in the form of profiled elements that could be used directly, after cutting and/or assembling to the desired dimensions, for example as semi-finished products for tires, in particular for treads.

### 5-4. Properties of the rubber compositions:

The properties of the rubber compositions C1 to C4, obtained from friction coefficient measurements under arbitrary suitable conditions (snow or wet, normal stress, sliding velocity and temperature) are given in Table III, a value greater than that of the reference composition Cr, arbitrarily set at 100, indicating an improved result, i.e. an aptitude for a shorter braking distance.

The results from Table III demonstrate that the composition C4 according to the invention has a value of the grip performance on wet of 130 same as that of the compositions C2 and C3, surprisingly much higher than that of the reference composition Cr of the tread of "Pilot Alpin PA4" as a snow tire, and that of the composition C1.

It is also noted that the results from Table III are obtained without being at the expense of the performance on snow, that is, the composition C4 according to the invention has equivalent grip on snowy ground to that of the reference composition Cr, and is superior to the other compositions C1, C2 and C3.

In conclusion, the rubber composition according to the invention makes possible an improvement of grip on wet of tires comprising this rubber composition as treads, without degrading, or even while improving, the grip on snowy ground.

**[Table II]**

| Rubber composition | C1 Comparative example | C2 Comparative example | C3 Comparative example | C4 |
|---|---|---|---|---|
| Elastomer (1) | 100 | - | - | - |
| Elastomer E1 (2) | - | 100 | 100 | 100 |
| Carbon black (3) | 4 | 4 | 4 | 4 |
| Silica (4) | 80 | 80 | 80 | 80 |
| Silane (5) | 6.4 | 6.4 | 6.4 | 6.4 |
| Plasticizing resin (6) | 16 | 16 | - | - |
| Non aromatic oil (7) | 16 | 16 | 32 | 40 |
| ZnO | 3 | 3 | 3 | 3 |
| Stearic acid | 2 | 2 | 2 | 2 |
| Antiozone wax | 1.5 | 1.5 | 1.5 | 1.5 |
| Antioxidant (8) | 2 | 2 | 2 | 2 |
| DPG (9) | 1.5 | 1.5 | 1.5 | 1.5 |
| Sulphur | 1.5 | 1.5 | 1.5 | 1.5 |
| Accelerator (10) | 1.5 | 1.5 | 1.5 | 1.5 |

| | | | | |
|---|---|---|---|---|
| (1) SBR 1500 (Tg = -50°C); (2) 1,3-butadiene/2-ethylhexyl methacrylate copolymer (Tg = -53 °C, Mn = 254 100 g/mol (PS calibration) and PI = 3.4, molar % (2-ethylhexyl methacrylate monomer unit) = 45.5, molar % (butadiene monomer unit) = 54.5); (3) Grade ASTM N234 (Cabot); (4) "Zeosil 1165 MP" silica from Rhodia (HDS type); (5) Coupling agent TESPT ("Si69" from Evonik); (6) Polylimonene resin ("Dercolyte L120" from the company DRT, Tg=-72°C); (7) Tris(2-ethylhexyl)phosphate ("Disflamoll TOF", from LANXESS Company, Tg= -105°C); (8) N-(1,3-dimethylbutyl)-N'-phenyl-para-phenylenediamine ("Santoflex 6-PPD" from Flexsys); (9) Diphenylguanidine ("Perkacit" DPG from Flexsys); (10) N-dicyclohexyl-2-benzothiazolesulphenamide ("Santocure CBS" from Flexsys). | | | | |

**[Table III]**

| Rubber composition | C1 | C2 | C3 | C4 | reference Cr (Alpin A4) |
|---|---|---|---|---|---|
| Snow µ laboratory | 80 | 40 | 85 | 100 | 100 |
| Wet µ laboratory | 90 | 130 | 130 | 130 | 100 |

## Claims

1. A tire tread that comprises a rubber composition comprising:
- a reinforcing filler;
- more than 35 phr of a liquid plasticizer exhibiting a Tg of less than -65°C;
- a crosslinking system;
- an elastomer matrix reactive to the crosslinking system, the elastomer matrix comprising an elastomer A comprising monomer units of a first methacrylic acid ester which represent at least 20 mol% of the monomer units of the elastomer A,
wherein phr represents parts by weight per hundred parts of elastomers present in the elastomer matrix, and wherein the Tg is measured by means of differential calorimeter according to the standard ASTM D3418-08.

2. The tire tread according to Claim 1, in which the first methacrylic acid ester corresponds to the formula (I)
CH₂=C(CH₃)-COO-Z (I)
where Z is a carbon-based chain comprising at least 2 carbon atoms, optionally substituted and optionally interrupted by one or more heteroatoms.

3. The tire tread according to Claim 2, in which Z comprises 2 to 20 carbon atoms.

4. The tire tread according to Claim 2 or Claim 3, in which Z is a hydrocarbon chain.

5. The tire tread according to any one of Claims 1 to 4, in which the first methacrylic acid ester is different from a methacrylic acid ester comprising one or more epoxide functions.

6. The tire tread according to any one of Claims 1 to 5, in which the first methacrylic acid ester is an aliphatic compound.

7. The tire tread according to any one of Claims 1 to 6, in which the elastomer matrix comprises monomer units that are reactive to the crosslinking system.

8. The tire tread according to any one of Claims 1 to 7, in which the elastomer matrix comprises a second elastomer, elastomer B, which comprises monomer units that are reactive to the crosslinking system.

9. The tire tread according to any one of Claims 1 to 8, in which the monomer units of the first methacrylic acid ester present in the elastomer A represent 100 mol% of the monomer units of the elastomer A.

10. The tire tread according to Claim 9, in which the elastomer A is a homopolymer of 2-ethylhexyl methacrylate, a homopolymer of n-octyl methacrylate, a homopolymer of isodecyl methacrylate or a homopolymer of n-tridecyl methacrylate.

11. The tire tread according to Claim 7, in which the elastomer A comprises monomer units that are reactive to the crosslinking system.

12. The tire tread according to Claim 11, in which the elastomer A comprises monomer units of a second monomer, which monomer units of the second monomer are reactive to the crosslinking system.

13. The tire tread according to Claim 12, in which the monomer units of the second monomer contain at least one NH₂, OH, imide, carbonate or epoxy group or a carbon-carbon double bond.

14. The tire tread according to Claim 13, in which the second monomer of the elastomer A is a 1,3-diene, preferably 1,3-butadiene or isoprene.

15. The tire tread according to any one of Claims 12 to 14, in which the elastomer A is a copolymer of the first methacrylic acid ester and of the second monomer.

## Patentansprüche

1. Reifenprofil, das eine Kautschukzusammensetzung umfasst, umfassend:
- einen Verstärkerfüllstoff,
- mehr als 35 phe eines flüssigen Weichmachers, der eine Tg von weniger als -65 °C aufweist;
- ein Vernetzungssystem;
- eine Elastomermatrix, die gegenüber dem Vernetzungssystem reaktiv ist, eine Elastomermatrix, umfassend ein Elastomer A, umfassend Monomereinheiten eines ersten Methacrylsäureesters, die mindestens 20 Mol% der Monomereinheiten des Elastomers A darstellen,
wobei phe Gewichtsteile pro hundert Elastomerteilen darstellt, die in der Elastomermatrix vorhanden sind, und wobei Tg mit Hilfe eines Differenzialkalorimeters gemäß dem Standard ASTM D3418-08 gemessen wird.

2. Reifenprofil nach Anspruch 1, wobei der erste Methacrylsäureester der folgenden Formel (I) entspricht
CH₂=C(CH₃)-COO-Z (I)
wobei Z eine Kohlenstoff-basierte Kette ist, umfassend mindestens 2 Kohlenstoffatome, optional substituiert und optional durch ein oder mehrere Heteroatome unterbrochen.

3. Reifenprofil nach Anspruch 2, wobei Z 2 bis 20 Kohlenstoffatome umfasst.

4. Reifenprofil nach Anspruch 2 oder Anspruch 3, wobei Z eine Kohlenwasserstoffkette ist.

5. Reifenprofil nach einem der Ansprüche 1 bis 4, wobei der erste Methacrylsäureester verschieden von einem Methacrylsäureester ist, der eine oder mehrere Epoxidfunktionen umfasst.

6. Reifenprofil nach einem der Ansprüche 1 bis 5, wobei der erste Methacrylsäureester eine aliphatische Verbindung ist.

7. Reifenprofil nach einem der Ansprüche 1 bis 6, wobei die Elastomermatrix Monomereinheiten umfasst, die gegenüber dem Vernetzungssystem reaktiv sind.

8. Reifenprofil nach einem der Ansprüche 1 bis 7, wobei die Elastomermatrix ein zweites Elastomer, Elastomer B, umfasst, das Monomereinheiten umfasst, die gegenüber dem Vernetzungssystem reaktiv sind.

9. Reifenprofil nach einem der Ansprüche 1 bis 8, wobei die Monomereinheiten des ersten Methacrylsäureesters im Elastomer A 100 Mol% der Monomereinheiten des Elastomers A darstellen.

10. Reifenprofil nach Anspruch 9, wobei das Elastomer A ein Homopolymer von 2-Ethylhexylmethacrylat, ein Homopolymer von n-Octylmethacrylat, ein Homopolymer von Isodecylmethacrylat oder ein Homopolymer von n-Tridecylmethacrylat ist.

11. Reifenprofil nach Anspruch 7, wobei das Elastomer A Monomereinheiten umfasst, die gegenüber dem Vernetzungssystem reaktiv sind.

12. Reifenprofil nach Anspruch 11, wobei das Elastomer A Monomereinheiten eines zweiten Monomers umfasst, wobei die Monomereinheiten des zweiten Monomers gegenüber dem Vernetzungssystem reaktiv sind.

13. Reifenprofil nach Anspruch 12, wobei die Monomereinheiten des zweiten Monomers mindestens eine NH₂-, OH-, Imid-, Carbonat- oder Epoxygruppe oder eine Kohlenstoff-Kohlenstoff-Doppelbindung enthalten.

14. Reifenprofil nach Anspruch 13, wobei das zweite Monomer des Elastomers A ein 1,3-Dien, vorzugsweise 1,3-Butadien oder Isopren ist.

15. Reifenprofil nach einem der Ansprüche 12 bis 14, wobei das Elastomer A ein Copolymer des ersten Methacrylsäureesters und des zweiten Monomers ist.

## Revendications

1. Bande de roulement qui comprend une composition de caoutchouc comprenant :
- une charge renforçante ;
- plus de 35 pce d'un plastifiant liquide présentant une Tg de moins de -65 °C ;
- un système de réticulation ;
- une matrice d'élastomère réactive vis-à-vis du système de réticulation, la matrice d'élastomère comprenant un élastomère A comprenant des motifs monomères d'un premier ester d'acide méthacrylique qui représentent au moins 20 % en mole des motifs monomères de l'élastomère A,
dans laquelle pce représente les parties en poids pour cent parties d'élastomères présents dans la matrice d'élastomère, et dans laquelle la Tg est mesurée au moyen d'un calorimètre différentiel selon la norme ASTM D3418-08.

2. Bande de roulement selon la revendication 1, dans laquelle le premier ester d'acide méthacrylique correspond à la formule (I)
CH₂=C(CH₃)-COO-Z (I)
où Z est une chaîne à base de carbone comprenant au moins 2 atomes de carbone, facultativement substituée et facultativement interrompue par un ou plusieurs hétéroatomes.

3. Bande de roulement selon la revendication 2, dans laquelle Z comprend 2 à 20 atomes de carbone.

4. Bande de roulement selon la revendication 2 ou la revendication 3, dans laquelle Z est une chaîne hydrocarbonée.

5. Bande de roulement selon l'une quelconque des revendications 1 à 4, dans laquelle le premier ester d'acide méthacrylique est différent d'un ester d'acide méthacrylique comprenant une ou plusieurs fonctions époxydes.

6. Bande de roulement selon l'une quelconque des revendications 1 à 5, dans laquelle le premier ester d'acide méthacrylique est un composé aliphatique.

7. Bande de roulement selon l'une quelconque des revendications 1 à 6, dans laquelle la matrice d'élastomère comprend des motifs monomères qui sont réactifs vis-à-vis du système de réticulation.

8. Bande de roulement selon l'une quelconque des revendications 1 à 7, dans laquelle la matrice d'élastomère comprend un second élastomère, l'élastomère B, qui comprend des motifs monomères qui sont réactifs vis-à-vis du système de réticulation.

9. Bande de roulement selon l'une quelconque des revendications 1 à 8, dans laquelle les motifs monomères du premier ester d'acide méthacrylique présent dans l'élastomère A représentent 100 % en mole des motifs monomères de l'élastomère A.

10. Bande de roulement selon la revendication 9, dans laquelle l'élastomère A est un homopolymère de méthacrylate de 2-éthylhexyle, un homopolymère de méthacrylate de n-octyle, un homopolymère de méthacrylate d'isodécyle, ou un homopolymère de méthacrylate de n-tridécyle.

11. Bande de roulement selon la revendication 7, dans laquelle l'élastomère A comprend des motifs monomères qui sont réactifs vis-à-vis du système de réticulation.

12. Bande de roulement selon la revendication 11, dans laquelle l'élastomère A comprend des motifs monomères d'un second monomère, lesquels motifs monomères du second monomère sont réactifs vis-à-vis du système de réticulation.

13. Bande de roulement selon la revendication 12, dans laquelle les motifs monomères du second monomère contiennent au moins un groupe NH₂, OH, imide, carbonate ou époxy ou une double liaison carbone-carbone.

14. Bande de roulement selon la revendication 13, dans laquelle le second monomère de l'élastomère A est un 1,3-diène, de préférence le 1,3-butadiène ou l'isoprène.

15. Bande de roulement selon l'une quelconque des revendications 12 à 14, dans laquelle l'élastomère A est un copolymère du premier ester d'acide méthacrylique et du second monomère.
